# EUROPEAN PATENT SPECIFICATION

(11) **EP 3 910 561 B1**
(45) Date of publication and mention of the grant of the patent: **25.12.2024**
(21) Application number: 21173490.0
(22) Date of filing: 12.05.2021
(51) Int. Cl.: G06N 10/60, G06N 5/01, G06N 20/00

(54) **COMPUTER-IMPLEMENTED METHOD, COMPUTING DEVICE AND COMPUTER PROGRAM FOR PERFORMING TIME-SERIES RECONSTRUCTION**
COMPUTERIMPLEMENTIERTES VERFAHREN, RECHNERVORRICHTUNG UND COMPUTERPROGRAMM ZUR DURCHFÜHRUNG EINER ZEITREIHENREKONSTRUKTION
PROCÉDÉ MIS EN UVRE PAR ORDINATEUR, DISPOSITIF INFORMATIQUE ET PROGRAMME INFORMATIQUE PERMETTANT D'EFFECTUER UNE RECONSTRUCTION DE SÉRIE CHRONOLOGIQUE

(30) Priority: 15.05.2020 DE 102020206160
(43) Date of publication of application: 17.11.2021
(73) Proprietor: Volkswagen Aktiengesellschaft, 38440 Wolfsburg (DE)
(72) Inventor: Kleshchonok, Andrii, 80809 München (DE); Yarkoni, Sheir, 81543 München (DE); Dzerin, Yury, 81373 München (DE)

(56) References cited:
- ANDREW LUCAS: "Ising formulations of many NP problems", FRONTIERS IN PHYSICS, vol. 2, no. 5, 12 February 2014 (2014-02-12), pages 1 - 27, XP055650743, DOI: 10.3389/fphy.2014.00005
- STEVEN ELSWORTH ET AL: "Time Series Forecasting Using LSTM Networks: A Symbolic Approach", ARXIV.ORG, CORNELL UNIVERSITY LIBRARY, 201 OLIN LIBRARY CORNELL UNIVERSITY ITHACA, NY 14853, 12 March 2020 (2020-03-12), XP081620015
- GLOVER FRED ET AL: "Quantum Bridge Analytics I: a tutorial on formulating and using QUBO models", 4OR, SPRINGER BERLIN HEIDELBERG, BERLIN/HEIDELBERG, vol. 17, no. 4, 26 November 2019 (2019-11-26), pages 335 - 371, XP036936647, ISSN: 1619-4500, [retrieved on 20191126], DOI: 10.1007/S10288-019-00424-Y
- SCHÄFER PATRICK ET AL: "SFA : a symbolic fourier approximation and index for similarity search in high dimensional datasets", PROCEEDINGS OF THE 15TH INTERNATIONAL CONFERENCE ON EXTENDING DATABASE TECHNOLOGY, EDBT '12, 1 March 2012 (2012-03-01), New York, New York, USA, pages 516 - 527, XP055811284, ISBN: 978-1-4503-0790-1, Retrieved from the Internet <URL:https://dl.acm.org/doi/pdf/10.1145/2247596.2247656> DOI: 10.1145/2247596.2247656

## Description

The present invention relates to a computer-implemented method, a computing device and a computer program for performing time-series reconstruction using a quantum processing unit. The processing of time-series, e.g. of time-series relating to sensor data, is a field of research and development. There is set of tools for time-series analysis available. Mostly these solutions are focused on specifying metrics calculated in a pairwise fashion between time-series, and cannot be extended to perform these comparisons in a parallelized way. Moreover, the optimal reconstruction of time-series is not in the scope of these tools.

The tools that are generally used for time-series comparison (or sensor signal analysis) use metrics that are sensitive to permutations and substitutions of time-series subsets and length of time-series. If problems are required to be invariant under these modifications, this approach may be computationally infeasible due to the poor scaling of the search space relative to the problem size. Also, those approaches might not perform one-versus-all comparisons, where a time-series can be compared to the whole data set, but rather they are focused on analyzing pairs of time-series sequentially which is sub-optimal.

STEVEN ELSWORTH ET AL: "Time Series Forecasting Using LSTM Networks: A Symbolic Approach", arxiv.org, Cornell University Library, 12 March 2020 (2020-03-12), discloses a concept for performing time-series projection with the help of a machine-learning model, and in particular a Long Short-Term Memory-based machine-learning model. There may be a desire for providing an improved concept for the analysis and reconstruction of time-series, e.g. for sensor data analysis.

This desire is addressed by the subject-matter of the independent claims.

Embodiments are based on the finding that the reconstruction of time-series is a task that can be mapped to one of the known algorithms that are suitable for processing by a quantum processing unit. In particular, by pre-processing the time-series to be reconstructed and the time-series used for comparison, the task can be transformed into a set cover-problem, for which an implementation on a quantum processing unit is available. The processing performed by the quantum processing unit can be used to compare the time-series to be reconstructed with a large number of other time-series at once, therefore providing a valuable one-versus-all comparison and reconstruction of the respective time-series.

The present disclosure provides a computer-implemented method according to the appended claim 1. The pair-wise comparisons may be used to determine the overlap between the ordered sets, i.e. the segments that are the same, in the same order, between the ordered sets of segments.

For example, each ordered set of segment is represented by a string of letters. The plurality of pair-wise comparisons may be performed by successively moving a string of letters representing the first ordered set of segments along a second string of letters representing one of the second ordered set of segments. The overlapping letters of the two strings of letters may be compared in a pairwise manner. Matches between the letters may be recorded as subsets of the respective second ordered set of segments. The selection of the subsets may, in turn, be based on the subsets generated in this comparison task.

In at least some embodiments, the quantum-processing unit selects the one or more subsets of the second ordered sets of segments using an approach for solving a set cover-problem. The set cover-problem is a problem with a known Ising Hamiltonian / quadratic unconstrained binary approximation (QUBO) formulation, which is thus suitable for processing by a quantum processing unit.

For example, the quantum-processing unit may select the one or more subsets of the second ordered sets of segments from all of the second ordered sets of segments at once using the approach for solving the set cover-problem. Thus, the reconstruction can be based on all of the plurality of further time-series at once.

For example, the discretized representation of the time-series to be reconstructed may be a string-based representation of the time-series. Each segment of the first ordered set of segments may be represented by a letter of the string. This is a compact representation that enables an efficient comparison.

In general, the discretized representation of the time-series to be reconstructed may be obtained by encoding the time-series. In other words, the method may comprise encoding the time-series.

For example, the time-series may be encoded using symbolic Fourier approximation or using a mean windows-based technique. Both techniques are suitable for encoding the respective time-series.

In various embodiments, the discretized representation of the time-series is, for each segment, based on a dominant Fourier component of a portion of the time-series being represented by the segment. In other words, each segment may be represented by a frequency component that is dominant and thus characterizes the respective segment.

For example, the time-series may be encoded by dividing the time-series into the ordered set of segments, assigning each of the segments a letter representing the respective segment, and combining the letters representing the segments to obtain a string representation of the time-series. Thus, the time-series can be transformed into a string representation.

In various embodiments, the plurality of further time-series are labeled. The method may comprise labeling the reconstructed time-series based on labels of further time-series associated with the one or more subsets. Thus, the knowledge about the further time-series (that is represented by the respective label) may be applied to the time-series to be reconstructed.

For example, the reconstructed time-series may be labeled based on a label of a further time-series being associated with a largest subset of the one or more subsets. Alternatively, the reconstructed time-series may be labeled based on a label of a further time-series being associated with a largest proportion of subsets of the one or more subsets. In both cases, the knowledge about the further time-series may be used to characterize the time-series to be reconstructed.

The present disclosure further provides a computer program according to the appended claim 12.

The present disclosure further provides a computation device according to the appended claim 13.
Fig. 1a shows a flow chart of an embodiment of a method for performing time-series reconstruction;
Fig. 1b shows a block diagram of a computing device for performing time-series reconstruction;
Fig. 2 shows a schematic illustration of an exemplary quantum processing unit-based system for time-series reconstruction and comparison; and
Fig. 3 shows a schematic illustration of an exemplary time-series encoding and pulling procedure.

Various example embodiments will now be described more fully with reference to the accompanying drawings in which some example embodiments are illustrated. In the figures, the thicknesses of lines, layers or regions may be exaggerated for clarity.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

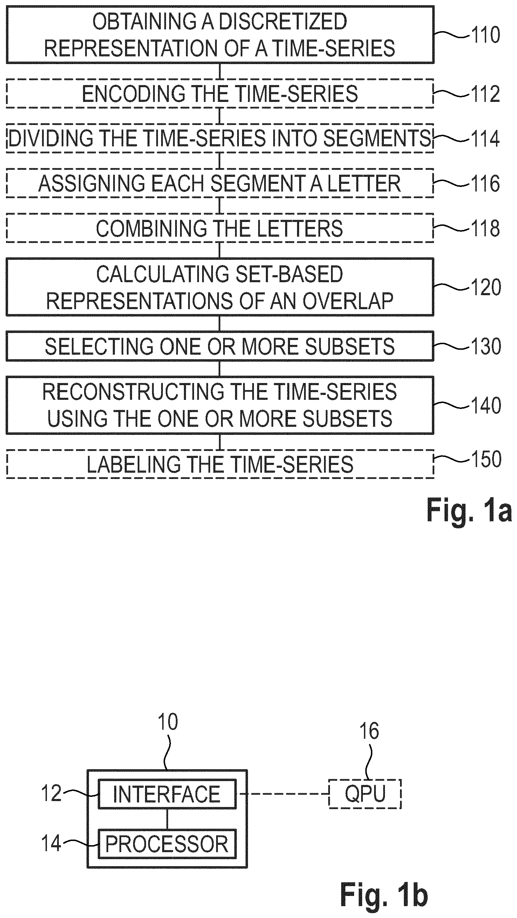

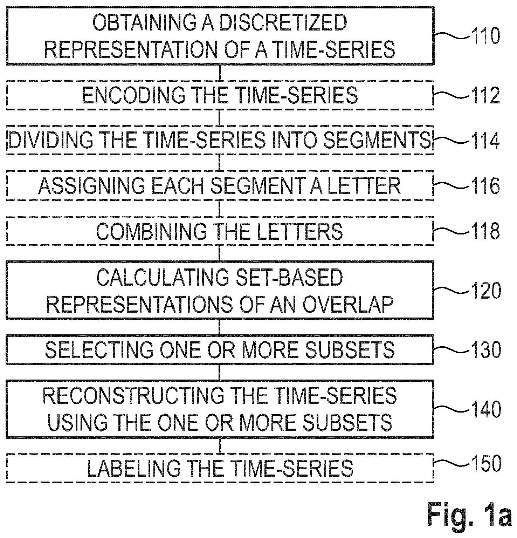

Fig. 1a shows a flow chart of an embodiment of a method for performing time-series reconstruction. The method comprises obtaining 110 a discretized representation of a time-series to be reconstructed. The discretized representation comprises a first ordered set of segments. The method comprises calculating 120 set-based representations of an overlap between the first ordered set of segments and of second ordered sets of segments of discretized representations of a plurality of further time-series. Each set-based representation represents an overlap between subsets of the first ordered set of segments and subsets of a second ordered set of segments. The method comprises selecting 130 one or more subsets of the second ordered sets of segments using a quantum-processing unit. The selection is based on the set-based representations of the overlap. The one or more subsets of the second ordered sets of segments are selected such, that, in combination, the one or more subsets of the sets of segments approximate the first ordered set of segments. The method comprises reconstructing 140 the time-series using the selected one or more subsets of the second ordered sets of segments.

Fig. 1b shows a block diagram of a corresponding computing device 10 for performing time-series reconstruction. For example, the computing device may be suitable for performing the method of Fig. 1a, e.g. in combination with a suitable quantum processing unit. The computation device 10 comprises an interface 12 for communicating with a quantum-processing unit 16. The one or more processors are coupled with the interface, which may in turn be coupled with the quantum processing unit. The computing device further comprises one or more processors 14, configured to perform the method of Fig. 1a, using the quantum-processing unit 16 to select the one or more subsets of the second ordered sets of segments. Fig. 1b further shows a system comprising both the computing device 10 and the quantum-processing unit. For example, the quantum processing unit may be external to the computing device, or the computing device may comprise the quantum processing unit.

The following description relates both to the method of Fig. 1a and to the corresponding computing device of Fig. 1b.

Embodiments of the present disclosure relate to a computer-implemented method, a computing device and a computer program for performing time-series reconstruction. In general, time-series reconstruction is the process of analyzing a time-series to be reconstructed, and of recognizing the elements that the time-series is made of, or the underlying reasons for the development of the time-series. For example, time-series reconstruction may be used to identify patterns in time-series that were previously observed in other time-series. Similarly, time-series reconstruction may be used to identify causes for a certain development of the respective time-series, based on causes that are known from previous time-series. In more general terms, in the reconstruction of time-series, phenomena that are observed in a time-series, or in portions or segments of time-series, are traced back to known, similar occurrences of the same phenomena within further time-series. In effect, the time-series to be reconstructed is regenerated (i.e. reconstructed) from segments that are known from the further The time-series represents a signal of a hardware sensor.

For example, the aim of the signal reconstruction may be to identify previous sensor signals with known underlying causes, or roads that have a similar characteristic to the road the time-series is based upon (e.g. for selection of a comparable road for driving).

The method comprises obtaining 110 the discretized representation of a time-series to be reconstructed. The discretized representation comprises a first ordered set of segments. In other words, the time-series to be reconstructed is represented (in a discretized manner) by the first ordered set of segments. The first ordered set of segments (and likewise the second orders sets of segments) has two major properties - for once, it is an ordered set, so that the segments are arranged in a pre-defined order within the ordered set. In this regard, the (first) ordered set can be seen as an (ordered) sequence of segments. The second major property is that it is a set, such that set-specific operations can be calculated on the (first) ordered set of segments. For example, subsets of the (first) ordered set can be determined, and an intersection between two ordered sets can be determined. In the context of this application, the subsets are determined using pair-wise comparisons between subsets of the two ordered sets.

In general, the discretized representation of the time-series to be reconstructed may be obtained by encoding 112 the time-series. In some embodiments, however, such encoding might not be necessary, e.g. if the time-series is obtained in a discretized manner from a third-party. In the encoding, the (continuous) time-series is transformed into the discretized representation. In various embodiments, a high-level representation is chosen as discretized representation. However, other representations, such as discrete samples of the time-series, may be used as well.

In various embodiments, each time-series is represented by a string of characters, with each character representing one segment of the time-series. In other words, the discretized representation of the time-series to be reconstructed may be a string-based (i.e. string in the meaning that is used in computer science, i.e. a string being a concatenation of characters, such as letters) representation of the time-series. Each segment of the first ordered set of segments (or of the second sets of segments) may be represented by a letter (or, more general, character) of the string. Likewise, each segment of the second ordered sets of segments may be represented by a letter/character of a string.

In general, the time-series to be reconstructed can be encoded by dividing it into segments, determining a discrete representation of each segment, and combining the discrete presentations in an ordered set of segments (i.e. of representations of segments). For examples, to yield a string-based representation, the following course of action can be taken. The time-series may be encoded 112 by dividing 114 the time-series into the ordered set of segments, assigning 116 each of the segments a letter representing the respective segment, and combining 118 the letters representing the segments to obtain a string representation of the time-series. For example, the time-series may be divided into the ordered set of segments based on a pre-defined length of each segment, or based on a pre-defined signal pattern demarking the beginning and/or end of each segment. For example, the time-series may be divided every pre-defined time-interval (e.g. every second). Alternatively, a shape of the time-series may be indicative of where the time-series is to be divided. For example, in time-series representing a repeating signal shape, such as an electrocardiogram signal, a pattern underlying the segments of the time-series may be used to divide the time-series.

Once the time-series is divided into segments, each segment may be assigned a discrete representation, such as a letter or a character. For example, a "binning" technique may be used, where each segment is assigned a bin (of a plurality of bins), with the discrete representation being based on the bin that the segment is assigned to. Such a concept is, for example, used in symbolic Fourier approximation. In other words, the time-series may be encoded using symbolic Fourier approximation. For example, the binning may be based on a dominant Fourier component of the segment of the time-series. In other words, the discretized (i.e. discrete) representation of the time-series may be, for each segment, based on a dominant Fourier component of a portion of the time-series being represented by the segment. Each segment may be binned according to the dominant Fourier component of the portion of the time-series being represented by the segment In another concept, denoted "mean windows discretization", a sliding window is applied on the time-series to obtain the segments, and a mean value is calculated on the individual segments. In other words, the time-series may be encoded using a mean windows-based technique. In both techniques, a dimensionality reduction is applied on the time-series.

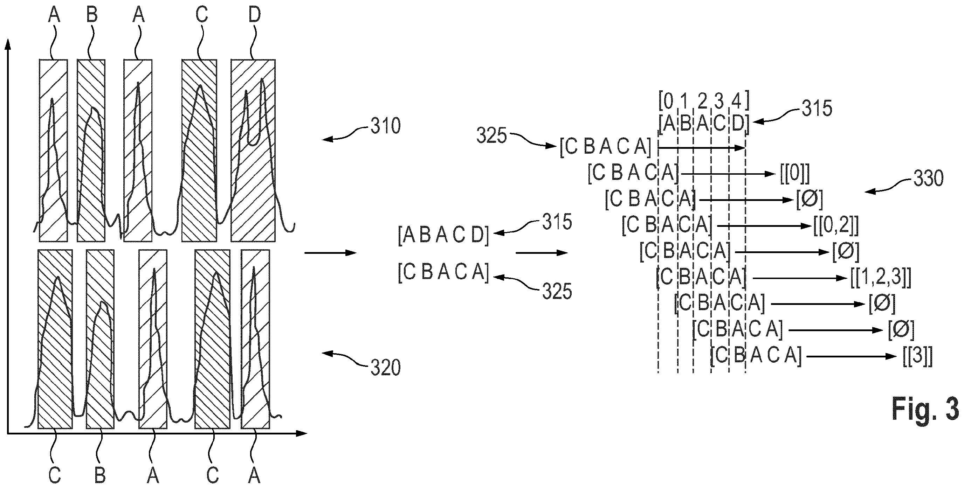

The method comprises calculating 120 set-based representations of an overlap between the first ordered set of segments and of second ordered sets of segments of discretized representations of a plurality of further time-series. Each set-based representation represents an overlap between subsets of the first ordered set of segments and subsets of a second ordered set of segments. A graphic overview of an exemplary calculation of the set-based representations of the overlap is shown in connection with Fig. 3. In general, the term "set-based representations" indicates, that the overlap is represented in the form or shape of mathematical sets. Each set-based representation may thus represent a set. Such a set may, in turn, comprise a number of subsets, with each subset representing an overlap between one or more consecutive segments (i.e. of the discrete representations thereof) of the first ordered set of segments and one or more consecutive segments of one of the second ordered sets of segments. For example, these sets may be determined by performing (low-complexity) pairwise comparisons between various subsets of the ordered sets. In other words, the set-based representations may be calculated by performing a plurality of pair-wise comparisons of subsets of the first ordered set of segments and subsets of the second ordered sets of segments.

Referring to the example given in Fig. 3, the plurality of pair-wise comparisons may be performed by shifting the two ordered sets (i.e. strings) relative to each other and recording, within a separate subset, the overlap between the two subsets. For example, as can be seen in Fig. 3, the plurality of pair-wise comparisons may be performed by successively moving a string of letters representing the first ordered set of segments along a second string of letters representing one of the second ordered set of segments. The overlapping letters of the two strings of letters may be compared in a pairwise manner. In the example of Fig. 3, the two strings "ABACD" (representing the time-series to be reconstructed) and "CBACA" (representing a further time-series are compared. First, the last letter of the second string ("A") is compared with the first letter of the first string ("A"), which is a match, thus the subset "{0}" is recorded (for the position within the first string where the overlap is found. Next, "AB" is compared with "CA", which contains no matches, thus an empty set is recorded. Next, "ABA" is compared with "ACA", which is a match for the letters at position 0 and 2, thus the subset {0,2} is recorded etc.

At every iteration, all character matches between the two strings may be recorded as a new set. In more general terms, matches between the letters may be recorded as subsets of the respective second ordered set of segments. In the example of Fig. 3, the set comprises the subsets {0}, {Ø}, {0, 2}, {Ø}, {1, 2, 3}, {Ø}, {Ø}, {3}, where it can be seen that the subsets {0} and {1,2,3} provide the best representation of the overlap between various subsets of the two ordered sets.

The method comprises selecting 130 the one or more subsets of the second ordered sets of segments using the quantum-processing unit, with the selection being based on the set-based representations of the overlap. A quantum processing unit, or QPU, is, with reference to the term "central processing unit" (CPU), a processing unit that uses quantum-mechanical phenomena, such as entanglement and superposition, to process data. In many cases, QPUs are suitable for providing stochastic results on the processed data, in contrast to the deterministic results being provided by central processing units. In consequence, due to the dissimilarities between CPUs and QPUs, many algorithms that are designed for CPUs, cannot be executed on QPUs, and vice versa. There are, however, a number of algorithms that are shown to work on QPUs, such as an algorithm that addresses the "set cover" problem, which is a combinatoric problem that is NP-complete, i.e. a problem that has a complexity that can only be solved using a brute-force approach (on CPUs). In the set cover problem, given a set of elements {1, 2 , ..., *n* } (the universe) and a collection *V* of sets whose union equals the universe, the set cover problem is to identify the smallest sub-collection of *V* whose union equals the universe. Applied to time-series reconstruction, *V* may comprise the set-based representations of the overlap, and the first ordered set of segments may be the universe. In this case, the QPU is used to identify the smallest sub-collection of *V* (the set-based representations of the overlap) whose union yields the universe (the first ordered set of segments, i.e. the first ordered set of segments). In other words, the quantum-processing unit may select the one or more subsets of the second ordered sets of segments using an approach for solving a set cover-problem. What makes this approach favorable over CPU-based approaches is that the QPU can identify this smallest sub-collection not only for one second ordered set at a time, but for all of the second ordered sets at once. In other words, the quantum-processing unit may select the one or more subsets of the second ordered sets of segments from all of the second ordered sets of segments at once using the approach for solving the set cover-problem. The presented formulation of set cover problem on a quantum processing unit allows to compare time series in a one-versus-all manner, i.e. a given time series (string) can be optimally reconstructed explicitly taking into account all further time-series simultaneously.

To process a problem on a quantum processing unit, it is converted into a representation that can be processed by the quantum processing unit. One such representation is the representation as a QUBO (quadratic unconstrained binary optimization) problem, which is a np-hard problem that is suitable for processing by a QPU. In many cases, the QUBO representation is a graph-based representation. There are algorithms that take the universe (e.g. the discretized representation of the time-series to be reconstructed) and the collection of sets (e.g. the set-based representations of the overlap) as inputs, and generate the corresponding QUBO representation for processing on the QPU. Accordingly, the method may comprise transforming the set-cover problem that is based on the discretized representation of the time-series to be reconstructed and the set-based representations of the overlap into the QUBO representation. The method may further comprise transferring the QUBO representation to the QPU, and obtaining a result of the processing of the QUBO representation from the QPU. The actual processing of the QUBO problem is performed by the QPU, while the pre- and postprocessing of the time-series is performed by a conventional processor, e.g. by the one or more processors 14.

Using the set cover approach, the one or more subsets of the second ordered sets of segments are selected such, that, in combination, the one or more subsets of the sets of segments approximate the first ordered set of segments. In other words, the discretized (or discrete) representations of the one or more subsets of the sets of segments may correspond to the discretized (or discrete) representations of the first ordered set of segments (if each of the discretized representations of a segment of the first ordered set of segments has a corresponding discretized representation in at least one of the second ordered sets of segments). These selected subsets match the time-series to be reconstructed, and may thus yield the reconstruction of the time-series to be reconstructed.

The method comprises reconstructing 140 the time-series using the selected one or more subsets of the second ordered sets of segments. In effect, the selected one or more subsets of the second ordered sets of segments are selected such, that their discretized representations correspond to the discretized representation of the first ordered set of segments, which in turn represents the time-series. Therefore, the selected one or more subsets of the second ordered sets of segments reconstruct the time-series. Based on the selected subsets, the time-series may be characterized, e.g. labeled, and causes for the development of the time-series may be identified.

In various embodiments, a part of the reconstruction is process called "labeling", where the time-series is labeled according to a labeling scheme. If the plurality of further time-series are labeled, the reconstruction can be used to label the time-series. In other words, the method may comprise labeling 150 the reconstructed time-series based on labels of further time-series associated with the one or more subsets. There are various approaches for selecting the appropriate label among multiple candidates. For example, the reconstructed time-series may be labeled based on a label of a further time-series being associated with a largest subset of the one or more subsets. Alternatively, the reconstructed time-series are labeled based on a label of a further time-series being associated with a largest proportion of subsets of the one or more subsets. Additionally or alternatively, clustering may be applied on the reconstruction of the time-series, and the label of the cluster the time-series is assigned to may be assigned to the time-series as well.

The interface 12 may correspond to one or more inputs and/or outputs for receiving and/or transmitting information, which may be in digital (bit) values according to a specified code, within a module, between modules or between modules of different entities. For example, the interface 12 may comprise interface circuitry configured to receive and/or transmit information.

In embodiments the one or more processors 14 may be implemented using one or more processing units, one or more processing devices, any means for processing, such as a processor, a computer or a programmable hardware component being operable with accordingly adapted software. In other words, the described function of the one or more processors 14 may as well be implemented in software, which is then executed on one or more programmable hardware components. Such hardware components may comprise a general-purpose processor, a Digital Signal Processor (DSP), a micro-controller, etc.

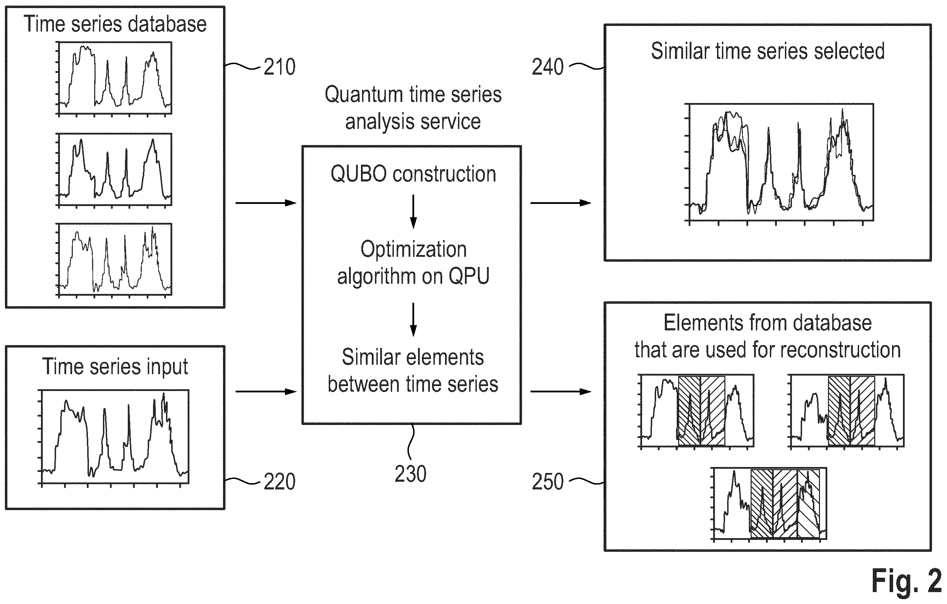

More details and aspects of the computer-implemented method, computing device, computer program or QPU are mentioned in connection with the proposed concept or one or more examples described above or below (e.g. Fig. 2 to 3). The computer-implemented method, computing device, computer program or QPU may comprise one or more additional optional features corresponding to one or more aspects of the proposed concept or one or more examples described above or below.

Various embodiments of the present disclosure relate to a quantum-computing approach for univariate time-series optimal reconstruction and semi-supervised clustering.

In automotive research, research is conducted that is focused on time-series analysis of sensor and mobility data. For example, research is conducted on finding similar time-series in database, having an optimal time-series for a process dynamic planed, reconstructing it piecewise from the available data and selecting parameters responsible for forming it, and mobility problems, when several pathways are compared, and one needs to find similar elements of roads/trajectories. `

There is set of known (i.e. non-quantum) tools for time-series analysis available. Mostly these approaches are focused on specifying metrics and calculating it in a pair-wise fashion between time-series. The typical examples of these metrics are Dynamic Time Warping, Longest Common Subsequence, feature based (Fourier or Wavelet transform, etc.). In other words, in known approaches, time-series are mostly compared pairwise.

The underlying desire of optimal reconstruction is an NP-hard from a computation point of view and has an exponential scaling on non-quantum computers, which may make it time-consuming and computationally inefficient. In the context of the present disclosure, the term "optimal reconstruction", "optimal" or "optimization" is used to indicate, that a reconstruction or result is desired that is better than other reconstructions or results. On the other hand, the "optimal reconstruction" is not to be understood to be limited to one optimum reconstruction or result. On the contrary, in various embodiments, in particular in view of the stochastic nature of results obtained from quantum processing units, the "optimal reconstruction/result" need not be the single best reconstruction/result, but one that is better than others and adequate for the task at hand.

In general, Quantum computers can be used to solve NP-hard problems more efficiently with polynomial scaling in contrast to exponential classical computer approach. At the same time, there is a limited availability of algorithms that can be performed by Quantum computers, thereby limiting the application of the Quantum computers to problems to be solved.

Embodiments of the present disclosure provide an approach for using a quantum computer to perform a time-series reconstruction. Embodiments may combine a Quantum algorithm with pipeline that leads to the set coverage problem formulation. In embodiments, one or more of the following tasks are performed:
1. discretization of time-series (e.g. obtaining the discretized representation of the time-series);
2. pairwise pulling procedure (e.g. calculating the set-based representations of the overlap), that enables mapping of timeseries comparison problem to the Ising Hamiltonian, that is solvable on quantum annealer (as laid out in more detail in the following);
3. interpretation of the quantum annealing solution and semi-supervised label assignment (e.g. reconstruction and labeling).

Optimization problems such as optimal one-versus-all time-series reconstruction is classically intractable. As quantum processors continue to grow in size and accuracy, they can provide an advantage to such classical methods in the future. The system proposed in the present disclosure may allow to analyze many time-series in parallel in a timely manner. The objective is approached in a general manner and therefore, may be applied to modifications given various quantum processors and data sources of time-series.

Embodiments of the present disclosure are applied to time-series reconstruction.

Embodiments of the present disclosure provide a quantum computing service for time-series reconstruction.

In the following, a novel system for analysis of time-series (TS) data is presented that uses a quantum processing unit (QPU). The TS database includes the following data source: hardware sensors. The QPU is used so that multiple TS could be simultaneously compared to the whole database, allowing to find similarities in the historical data in an improved manner. The overlapping parts (i.e. subsets) of the TS data may correspond to common features between TS, which allow to reconstruct a given TS from historical data. From this, the control parameters that are responsible for the specific features of the given TS may be traced back. A schematic of the system is shown in Fig. 2. Fig. 2 shows a schematic illustration of an exemplary QPU based system for TS reconstruction and comparison. The inputs (time-series database 210; time-series input 220) to the quantum TS analysis system are shown on the left side. The QPU based computational tasks 230 (QUBO construction, optimization algorithm on QPU, similar elements between time-series) are shown in the center. The results representation are shown on the right 240;250: similar time-series selection 240 and common elements identification 250 (shown with highlighted blocks).

The approach is based on a TS database of historical data (e.g. the plurality of further time-series) and a given TS (e.g. the time-series to be reconstructed) as input to be reconstructed using the database. These two inputs are passed to the quantum TS analysis algorithm (e.g. the method for performing time-series reconstruction). To make the TS analysis objective suitable for quantum computing, it may first be transformed to a quadratic unconstrained binary optimization (QUBO) problem. To formulate the QUBO problem, dimensionality reduction is performed on the TS to discretize the data (e.g. to obtain the discretized representation of the time-series to be reconstructed). To perform this task, the Symbolic Fourier Approximation (SFA) (see Patrick Schäfer and Mikael Högqvist. Sfa: a symbolic Fourier approximation and index for similarity search in high dimensional datasets. In Proceedings of the 15th International Conference on Extending Database Technology, pages 516-527. ACM, 2012) or mean windows-based techniques may be used to encode (all) the TS data in a compact form of a string of characters. This string representation allows to formulate the TS comparison/reconstruction problem as the set coverage problem (one of Karp's original 21 NP-complete problems, with a known Ising Hamiltonian/QUBO formulation, which can be found in: Andrew Lucas. Ising formulations of many np problems. Frontiers in Physics, 2:5, 2014.).

To obtain the sets required to formulate the set coverage problem, introduce a pulling procedure between a pair of strings is introduced, illustrated in Fig.3. Fig. 3 shows a schematic illustration of an exemplary TS encoding and pulling procedure to produce subsets of set *V*= {{0},{∅},{0,2},{∅},{1,2,3},{∅},{∅},{3}}. For example, the pulling procedure may be used to calculate the set-based representations of the overlap between the first ordered set of segments and of the second ordered sets of segments. An optimal selection to cover *U* = {0,1,2,3,4} in this case would be underlined subsets *V* = {{0},{1,2,3}} with item numbers 0 and 4. The original TS 310 is fixed, represented by string [ABACD] 315, and forms the universe set *U* = {0,1,2,3,4}.

The second TS 320, represented by letters [CBACA] 325, is pulled along the representation of the original TS 310/315 in a letter-by-letter manner. For each position, if the letters of the two strings match, the position of matched characters is recorded. Each sequential pulling move is illustrated in Fig. 3. This generates a set of sets *V*= {{0},{∅},{0,2},{∅},{1,2,3},{∅},{∅},{3}} 330. It can be seen that there are several possibilities to select *Vᵢ* to cover *U*, and finding an optimal selection makes it NP-hard in general case. It is this hard task that the QPU is used to solve. In the case illustrated in Fig. 3, the optimal selection of subsets is underlined. This procedure is repeated for the rest of encoded TS to form set of sets *V* , that is later used by the set coverage algorithm to cover the universe *U* in an optimal way.

The QUBO problem is then passed to the optimization algorithm that uses the QPU, which is used here as an optimization black-box. Given the formulation of the QUBO problem, the optimal solution from the QPU is interpreted as the set of elements (or set of TS features) from the database which are most similar to those of the given TS to be reconstructed. This information can be used to perform semi-supervised clustering. In the presence of labels for the data in the database, various similarity metrics between the TS can be considered, and the result of the optimization may be used to assign a label to the reconstructed TS. Alternatively, in the absence of a labeled database, unsupervised clustering can be performed. Similar TS can be found and grouped based on the aforementioned metrics, and these groups may be used to assign new labels to the TS data. Finally, elements that are shared between the various TS can also be analyzed and compared. This allows to target specific patterns or behaviors in the TS data, and trace back the parameters that are responsible for them. Thereupon, new TS with predefined properties can be designed. This allows the end user to automatically analyze database, extract similarities for the incoming data and perform analysis of common elements between time-series to find an optimal one.

The presented approach to TS analysis has a principal advantage in comparison to classical techniques- by formulating the problem as a set coverage problem and employing quantum computing optimization techniques, a given TS can be reconstructed from a full TS database in parallel. Because the complexity of TS comparison makes it an intractable problem for classical computers, quantum computing is a promising alternative that can solve such problems more efficiently. Various embodiments may have a polynomial scaling in the size of the problem, making efficient use of the quantum computing hardware. As QPUs continue to grow in size and power, embodiments may be used to cover larger data sets and may eventually be used in automatic production applications.

As already mentioned, in embodiments the respective methods may be implemented as computer programs, which can be executed on a respective hardware. Hence, another embodiment is a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

A quantum processor or quantum processing unit as described may refer to any programmable quantum device with an executable set of instructions that is based on 'quantum bits' or 'qubits'.

A quantum processor or quantum processing unit as described may refer to any programmable quantum device with an executable set of instructions that is based on 'quantum bits' or 'qubits'. An interface admits a graphical representation of a problem to be solved either as a single instruction or a sequence of instructions to the quantum device. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### List of reference signs

- 10: Computing device
- 12: Interface
- 14: One or more processors
- 16: Quantum processing unit
- 110: Obtaining a discretized representation of a time-series
- 112: Encoding the time-series
- 114: Dividing the time-series into segments
- 116: Assigning each segment a letter
- 118: Combining the letters
- 120: Calculating set-based representations of an overlap
- 130: Selecting one or more subsets
- 140: Reconstructing the time-series using the one or more subsets
- 150: Labeling the time-series
- 210: Time-series database
- 220: Time-series input
- 230: Tasks to be performed
- 240: Similar time-series selected
- 250: Elements from database that are used for reconstruction
- 310: Original time-series
- 315: String representation of original time-series
- 320: Time-series from database
- 325: String representation of time-series from database
- 330: Subsets

## Claims

1. A computer-implemented method for performing time-series reconstruction, the method comprising:
Obtaining (110), by a computing device, a discretized representation of a time-series to be reconstructed, the time-series representing a signal of a hardware sensor, the discretized representation comprising a first ordered set of segments;
Calculating (120), by the computing device, set-based representations of an overlap between the first ordered set of segments and of second ordered sets of segments of discretized representations of a plurality of further time-series,
wherein each set-based representation represents an overlap between subsets of the first ordered set of segments and subsets of a second ordered set of segments,
wherein the set-based representations are calculated by performing a plurality of pair-wise comparisons of subsets of the first ordered set of segments and subsets of the second ordered sets of segments;
Selecting (130), by a quantum processing unit coupled with the computing device, one or more subsets of the second ordered sets of segments using a quantum-processing unit, the selection being based on the set-based representations of the overlap, wherein the one or more subsets of the second ordered sets of segments are selected such, that, in combination, the one or more subsets of the sets of segments approximate the first ordered set of segments; and
Reconstructing (140), by the computing device, the time-series using the selected one or more subsets of the second ordered sets of segments.

2. The method according to claim 1, wherein each ordered set of segment is represented by a string of letters, wherein the plurality of pair-wise comparisons are performed by successively moving a string of letters representing the first ordered set of segments along a second string of letters representing one of the second ordered set of segments, wherein the overlapping letters of the two strings of letters are compared in a pairwise manner, wherein matches between the letters are recorded as subsets of the respective second ordered set of segments.

3. The method according to one of the claims 1 or 2, wherein the quantum-processing unit selects the one or more subsets of the second ordered sets of segments using an approach for solving a set cover-problem.

4. The method according to claim 3, wherein the quantum-processing unit selects the one or more subsets of the second ordered sets of segments from all of the second ordered sets of segments at once using the approach for solving the set cover-problem.

5. The method according to one of the claims 1 to 4, wherein the discretized representation of the time-series to be reconstructed is a string-based representation of the time-series, with each segment of the first ordered set of segments being represented by a letter of the string.

6. The method according to one of the claims 1 to 5, wherein the discretized representation of the time-series to be reconstructed is obtained by encoding (112), by the computing device, the time-series.

7. The method according to claim 6, wherein the discretized representation of the time-series to be reconstructed is obtained by encoding (112), by the computing device, the time-series using symbolic Fourier approximation or using a mean windows-based technique.

8. The method according to one of the claims 6 or 7, wherein the discretized representation of the time-series is, for each segment, based on a dominant Fourier component of a portion of the time-series being represented by the segment.

9. The method according to one of the claims 6 to 8, wherein the time-series is encoded (112), by the computing device, by dividing (114) the time-series into the ordered set of segments, assigning (116) each of the segments a letter representing the respective segment, and combining (118) the letters representing the segments to obtain a string representation of the time-series.

10. The method according to one of the claims 1 to 9, wherein the plurality of further time-series are labeled, wherein the method comprises labeling (150), by the computing device, the reconstructed time-series based on labels of further time-series associated with the one or more subsets.

11. The method according to claim 10, wherein the reconstructed time-series are labeled based on a label of a further time-series being associated with a largest subset of the one or more subsets,
or wherein the reconstructed time-series are labeled based on a label of a further time-series being associated with a largest proportion of subsets of the one or more subsets.

12. A computer program having a program code which, when the computer program is executed by a system comprising a computing device and a quantum-processing unit (16) that is coupled to the computing device, causes the system to perform the method of one of the claims 1 to 11.

13. A computing system comprising:
a computing device; and
a quantum-processing unit (16) coupled to the computing device, wherein the computing system is configured to perform the method according to one of the claims 1 to 11.

## Patentansprüche

1. Computerimplementiertes Verfahren zum Durchführen einer Zeitreihenrekonstruktion, das Verfahren umfassend:
Erhalten (110), durch eine Rechenvorrichtung, einer diskretisierten Darstellung einer zu rekonstruierenden Zeitreihe, wobei die Zeitreihe ein Signal eines Hardwaresensors darstellt und die diskretisierte Darstellung umfassend einen ersten geordneten Satz von Segmenten;
Berechnen (120), durch die Rechenvorrichtung, von satzbasierten Darstellungen einer Überlappung zwischen dem ersten geordneten Satz von Segmenten und von zweiten geordneten Sätzen von Segmenten von diskretisierten Darstellungen einer Vielzahl von weiteren Zeitreihen,
wobei jede satzbasierte Darstellung eine Überlappung zwischen Teilsätzen des ersten geordneten Satzes von Segmenten und Teilsätzen eines zweiten geordneten Satzes von Segmenten darstellt,
wobei die satzbasierten Darstellungen durch Durchführen einer Vielzahl von paarweisen Vergleichen von Teilsätzen des ersten geordneten Satzes von Segmenten und Teilsätzen der zweiten geordneten Sätze von Segmenten berechnet werden;
Auswählen (130), durch eine Quantenverarbeitungseinheit, die mit der Rechenvorrichtung gekoppelt ist, von einem oder mehreren Teilsätzen der zweiten geordneten Sätze von Segmenten unter Verwendung einer Quantenverarbeitungseinheit, wobei die Auswahl auf den satzbasierten Darstellungen der Überlappung basiert, wobei der eine oder die mehreren Teilsätze der zweiten geordneten Sätze von Segmenten derart ausgewählt werden, dass, in Kombination, der eine oder die mehreren Teilsätze der Sätze von Segmenten dem ersten geordneten Satz von Segmenten approximieren; und
Rekonstruieren (140), durch die Rechenvorrichtung, der Zeitreihe unter Verwendung des ausgewählten einen oder der ausgewählten mehreren Teilsätze der zweiten geordneten Sätze von Segmenten.

2. Verfahren nach Anspruch 1, wobei jeder geordnete Satz von Segmenten durch eine Buchstabenfolge dargestellt wird, wobei die Vielzahl von paarweisen Vergleichen durch sukzessives Bewegen einer Buchstabenfolge, die den ersten geordneten Satz von Segmenten darstellt, entlang einer zweiten Buchstabenfolge durchgeführt wird, die einen der zweiten geordneten Sätze von Segmenten darstellt, wobei die überlappenden Buchstaben der zwei Buchstabenfolgen paarweise verglichen werden, wobei Übereinstimmungen zwischen den Buchstaben als Teilsätze des jeweiligen zweiten geordneten Satzes von Segmenten aufgezeichnet werden.

3. Verfahren nach einem der Ansprüche 1 oder 2, wobei die Quantenverarbeitungseinheit den einen oder die mehreren Teilsätze der zweiten geordneten Sätze von Segmenten unter Verwendung eines Ansatzes zum Lösen eines Satzabdeckungsproblems auswählt.

4. Verfahren nach Anspruch 3, wobei die Quantenverarbeitungseinheit unter Verwendung des Ansatzes zum Lösen des Satzabdeckungsproblems den einen oder die mehreren Teilsätze der zweiten geordneten Sätze von Segmenten aus allen zweiten geordneten Sätzen von Segmenten auf einmal auswählt.

5. Verfahren nach einem der Ansprüche 1 bis 4, wobei die diskretisierte Darstellung der zu rekonstruierenden Zeitreihe eine folgenbasierte Darstellung der Zeitreihe ist, wobei jedes Segment des ersten geordneten Satzes von Segmenten durch einen Buchstaben der Folge dargestellt wird.

6. Verfahren nach einem der Ansprüche 1 bis 5, wobei die diskretisierte Darstellung der zu rekonstruierenden Zeitreihe durch Codieren (112), durch die Rechenvorrichtung, der Zeitreihe erhalten wird.

7. Verfahren nach Anspruch 6, wobei die diskretisierte Darstellung der zu rekonstruierenden Zeitreihe durch Codieren (112), durch die Rechenvorrichtung, der Zeitreihe unter Verwendung einer symbolischen Fourier-Approximation oder unter Verwendung einer auf Mittelwertfenster-basierenden Technik erhalten wird.

8. Verfahren nach einem der Ansprüche 6 oder 7, wobei die diskretisierte Darstellung der Zeitreihe, für jedes Segment, auf einer dominanten Fourier-Komponente eines Abschnitts der Zeitreihe basiert, der durch das Segment dargestellt wird.

9. Verfahren nach einem der Ansprüche 6 bis 8, wobei die Zeitreihe, durch die Rechenvorrichtung, durch Aufteilen (114) der Zeitreihe in den geordneten Satz von Segmenten, Zuweisen (116) jedes der Segmente einen Buchstaben, der das jeweilige Segment darstellt, und Kombinieren (118) der Buchstaben, die die Segmente darstellen, um eine Folgendarstellung der Zeitreihe zu erhalten, codiert (112) wird.

10. Verfahren nach einem der Ansprüche 1 bis 9, wobei die Vielzahl weiterer Zeitreihen beschriftet ist, wobei das Verfahren das Beschriften (150), durch die Rechenvorrichtung, der rekonstruierten Zeitreihen basierend auf Beschriftungen weiterer Zeitreihen umfasst, die mit dem einen oder den mehreren Teilsätzen verknüpft sind.

11. Verfahren nach Anspruch 10, wobei die rekonstruierten Zeitreihen basierend auf einer Beschriftung einer weiteren Zeitreihe beschriftet werden, die mit einem größten Teilsatz des einen oder der mehreren Teilsätze verknüpft ist,
oder wobei die rekonstruierten Zeitreihen basierend auf einer Beschriftung einer weiteren Zeitreihe beschriftet werden, die mit einem größten Anteil von Teilsätzen des einen oder der mehreren Teilsätze verknüpft ist.

12. Computerprogramm, das einem Programmcode aufweist, der, wenn das Computerprogramm durch ein System ausgeführt wird, umfassend eine Rechenvorrichtung und eine Quantenverarbeitungseinheit (16), die mit der Rechenvorrichtung gekoppelt ist, das System veranlasst, das Verfahren nach einem der Ansprüche 1 bis 11 durchzuführen.

13. Rechensystem, umfassend:
eine Rechenvorrichtung; und
eine Quantenverarbeitungseinheit (16), die mit der Rechenvorrichtung gekoppelt ist, wobei das Rechensystem konfiguriert ist, um das Verfahren nach einem der Ansprüche 1 bis 11 durchzuführen.

## Revendications

1. Procédé mis en oeuvre par ordinateur permettant de réaliser une reconstruction de séries temporelles, le procédé comprenant :
l'obtention (110), par un dispositif informatique, d'une représentation discrétisée d'une série temporelle à reconstruire, la série temporelle représentant un signal d'un capteur matériel, la représentation discrétisée comprenant un premier ensemble ordonné de segments ;
le calcul (120), par le dispositif informatique, de représentations basées sur des ensembles d'un chevauchement entre le premier ensemble ordonné de segments et des seconds ensembles ordonnés de segments de représentations discrétisées d'une pluralité d'autres séries temporelles,
dans lequel chaque représentation basée sur des ensembles représente un chevauchement entre des sous-ensembles du premier ensemble ordonné de segments et des sous-ensembles d'un second ensemble ordonné de segments,
dans lequel les représentations basées sur des ensembles sont calculées en réalisant une pluralité de comparaisons deux à deux de sous-ensembles du premier ensemble ordonné de segments et de sous-ensembles du second ensemble ordonné de segments ;
la sélection (130), par une unité de traitement quantique couplée au dispositif informatique, d'un ou plusieurs sous-ensembles des seconds ensembles ordonnés de segments à l'aide d'une unité de traitement quantique, la sélection étant basée sur les représentations basées sur des ensembles du chevauchement, dans lequel le ou les sous-ensembles des seconds ensembles ordonnés de segments sont sélectionnés de telle sorte que, quand ils sont combinés, le ou les sous-ensembles des ensembles de segments sont une approximation du premier ensemble ordonné de segments ; et
la reconstruction (140), par le dispositif informatique, de la série temporelle à l'aide du ou des sous-ensembles sélectionnés des seconds ensembles ordonnés de segments.

2. Procédé selon la revendication 1, dans lequel chaque ensemble ordonné de segments est représenté par une chaîne de lettres, dans lequel la pluralité de comparaisons deux à deux sont réalisées en déplaçant successivement une chaîne de lettres représentant le premier ensemble ordonné de segments le long d'une seconde chaîne de lettres représentant l'un du second ensemble ordonné de segments, dans lequel les lettres qui se chevauchent dans les deux chaînes de lettres sont comparées deux à deux, dans lequel les correspondances entre les lettres sont enregistrées en tant que sous-ensembles du second ensemble ordonné de segments respectif.

3. Procédé selon l'une des revendications 1 ou 2, dans lequel l'unité de traitement quantique sélectionne le ou les sous-ensembles des seconds ensembles ordonnés de segments à l'aide d'une approche de résolution du problème de couverture par ensembles.

4. Procédé selon la revendication 3, dans lequel l'unité de traitement quantique sélectionne le ou les sous-ensembles des seconds ensembles ordonnés de segments parmi tous les seconds ensembles ordonnés de segments en une seule fois à l'aide de l'approche de résolution du problème de couverture par ensembles.

5. Procédé selon l'une des revendications 1 à 4, dans lequel la représentation discrétisée de la série temporelle à reconstruire est une représentation de la série temporelle basée sur une chaîne, chaque segment du premier ensemble ordonné de segments étant représenté par une lettre de la chaîne.

6. Procédé selon l'une des revendications 1 à 5, dans lequel la représentation discrétisée de la série temporelle à reconstruire est obtenue par codage (112), par le dispositif de calcul, de la série temporelle.

7. Procédé selon la revendication 6, dans lequel la représentation discrétisée de la série temporelle à reconstruire est obtenue par codage (112), par le dispositif informatique, de la série temporelle à l'aide d'une approximation de Fourier symbolique ou à l'aide d'une technique basée sur les fenêtres moyennes.

8. Procédé selon l'une des revendications 6 ou 7, dans lequel la représentation discrétisée de la série temporelle est, pour chaque segment, basée sur une composante de Fourier dominante d'une partie de la série temporelle qui est représentée par le segment.

9. Procédé selon l'une des revendications 6 à 8, dans lequel la série temporelle est codée (112), par le dispositif informatique, en divisant (114) la série temporelle en l'ensemble ordonné de segments, en attribuant (116) à chacun des segments une lettre représentant le segment respectif, et en combinant (118) les lettres représentant les segments afin d'obtenir une représentation sous forme de chaîne de la série temporelle.

10. Procédé selon l'une des revendications 1 à 9, dans lequel la pluralité d'autres séries temporelles sont étiquetées, dans lequel le procédé comprend l'étiquetage (150), par le dispositif informatique, de la série temporelle reconstruite sur la base d'étiquettes d'autres séries temporelles associées au ou aux sous-ensembles.

11. Procédé selon la revendication 10, dans lequel les séries temporelles reconstruites sont étiquetées sur la base d'une étiquette d'une autre série temporelle qui est associée à un sous-ensemble le plus important parmi le ou les sous-ensembles,
ou dans lequel les séries temporelles reconstruites sont étiquetées sur la base d'une étiquette d'une autre série temporelle qui est associée à une proportion la plus grande de sous-ensembles parmi le ou les sous-ensembles.

12. Programme d'ordinateur ayant un code de programme qui, lorsque le programme d'ordinateur est exécuté par un système comprenant un dispositif informatique et une unité de traitement quantique (16) couplée au dispositif informatique, amène le système à réaliser le procédé selon l'une des revendications 1 à 11.

13. Système informatique comprenant :
un dispositif informatique ; et
une unité de traitement quantique (16) couplée au dispositif informatique, dans lequel le système informatique est configuré pour réaliser le procédé selon l'une des revendications 1 à 11.
